# EUROPEAN PATENT APPLICATION

(11) **EP 4 033 563 A2**
(43) Date of publication of application: **27.07.2022**
(21) Application number: 22150295.8
(22) Date of filing: 05.01.2022
(51) Int. Cl.: H01M 4/13, H01M 4/66, H01M 4/80

(54) **ELECTRODE AND ELECTRICITY STORAGE DEVICE**

(30) Priority: 22.01.2021 JP 2021009068
(71) Applicant: HONDA MOTOR CO., LTD., Minato-ku Tokyo 107-8556 (JP); Sumitomo Electric Industries, Ltd., Osaka-shi, Osaka 541-0041 (JP)
(72) Inventor: TANAAMI, Kiyoshi, Wako-shi, Saitama, 351-0193 (JP); TANAKA, Toshimitsu, Wako-shi, Saitama, 351-0193 (JP); ISOGAI, Yuji, Wako-shi, Saitama, 351-0193 (JP); OKUNO, Kazuki, Osaka-shi, Osaka-fu, 541-0041 (JP); HOSOE, Akihisa, Osaka-shi, Osaka-fu, 541-0041 (JP); TAKEBAYASHI, Hiroshi, Osaka-shi, Osaka-fu, 541-0041 (JP)
(74) Representative: Weickmann & Weickmann PartmbB

(57) **Abstract**

Provided is an electrode including: a current collector; an electrode material mixture; and an electrode tab, the current collector being a porous metal body having a region A and a region B with a porosity lower than that of the region A, the region A having pores filled with the electrode material mixture, the electrode tab being fixed on the region B, the region A having a subregion A1 and a subregion A2 with a porosity lower than that of the subregion A1, the subregion A2 being more distant from the electrode tab than the subregion A1. Also provided is an electricity storage device including the electrode.

## Description

This application is based on and claims the benefit of priority from Japanese Patent Application 2021-009068, filed on 22 January 2021, the content of which is incorporated herein by reference.

### BACKGROUND OF THE INVENTION

### Field of the Invention

The present invention relates to an electrode and an electricity storage device.

### Related Art

In the conventional art, lithium-ion secondary batteries are in widespread use as high-energy-density, electricity-storage devices. A typical lithium-ion secondary battery includes a positive electrode, a negative electrode, a separator provided between the electrodes, and an electrolytic solution with which the separator is impregnated. All-solid-state batteries are also known, which include an inorganic solid electrolyte instead of the electrolytic solution.

For such a lithium-ion secondary battery, a variety of needs exist depending on the intended use, such as a further increase in volume energy density for vehicle applications. Such an increase in volume energy density can be achieved by a method of increasing the packing density of an electrode active material.

A proposed method of increasing the packing density of an electrode active material includes using a foamed metal as a current collector for forming positive and negative electrodes (see Patent Documents 1 and 2). Such a foamed metal has a network structure uniform in pore size and has a large surface area. Therefore, when pores of such a foamed metal are filled with an electrode material mixture containing an electrode active material, a relatively large amount of the electrode active material can be packed per unit area of the electrode.
Patent Document 1: Japanese Unexamined Patent Application, Publication No. H07-099058
Patent Document 2: Japanese Unexamined Patent Application, Publication No. H08-329954

### SUMMARY OF THE INVENTION

Unfortunately, the formed metal has a problem in that it will form a current collector portion having no electrode material mixture, which has a metal content much lower than that in the case of a current collector foil and may increase the electronic resistance. In particular, when a large amount of current flows through the formed metal, such a current collector portion may cause insufficient supply of electrons and cause a significant increase in electronic resistance. Moreover, the foamed metal may have insufficient strength at a welded portion or in a current collection portion, which may raise a problem such as easy breakage or low durability.

It is an object of the present invention to provide an electrode that helps to reduce electronic resistance and to improve durability.

An aspect of the present invention is directed to an electrode including: a current collector; an electrode material mixture; and an electrode tab, the current collector being a porous metal body having a region A and a region B with a porosity lower than that of the region A, the region A having pores filled with the electrode material mixture, the electrode tab being fixed on the region B, the region A having a subregion A1 and a subregion A2 with a porosity lower than that of the subregion A1, the subregion A2 being more distant from the electrode tab than the subregion A1.

The region B may have a subregion B1 on which the electrode tab is fixed and a subregion B2 on which no electrode tab is fixed, and the subregion B1 may have a porosity lower than that of the region A.

The region A may further have a subregion A3 that connects the subregion A2 and the region B, and the subregion A3 may have a porosity lower than that of the subregion A1.

The region A may further have a subregion A3 that connects the subregion A2 and the region B, and the subregions A1, A2, A3, B1, and B2 may respectively have a porosity of ε_{A1}, a porosity of ε_{A2}, a porosity of ε_{A3}, a porosity of ε_{B1}, and a porosity of ε_{B2} satisfying the formula: ε_{A1} > ε_{A3} ≥ ε_{A2} > ε_{B2} ≥ ε_{B1}.

The current collector may have a substantially rectangular parallelepiped shape.

Another aspect of the present invention is directed to an electricity storage device including the electrode defined above.

The present invention makes it possible to provide an electrode that helps to reduce electronic resistance and to improve durability.

### BRIEF DESCRIPTION OF THE DRAWINGS

FIG. 1 is a view showing an example of an electrode according to an embodiment of the present invention;
FIG. 2 is a view showing an example of a current collector for the electrode of FIG. 1;
FIG. 3 is a view showing another example of a current collector for the electrode of FIG. 1;
FIG. 4 is a graph showing results of evaluation of the initial cell resistance of the lithium-ion secondary batteries of Example 1 and Comparative Example 1;
FIG. 5 is a graph showing results of evaluation of the C-rate characteristics of the lithium-ion secondary batteries of Example 1 and Comparative Example 1;
FIG. 6 is a graph showing results of evaluation of the capacity retention of the lithium-ion secondary batteries of Example 1 and Comparative Example 1;
FIG. 7 is a graph showing results of evaluation of the rate of change in the electronic resistance (0.1 S) of the lithium-ion secondary batteries of Example 1 and Comparative Example 1;
FIG. 8 is a graph showing results of evaluation of the rate of change in the reaction resistance (1 S) of the lithium-ion secondary batteries of Example 1 and Comparative Example 1; and
FIG. 9 is a graph showing results of evaluation of the rate of change in the ion diffusion resistance (10 S) of the lithium-ion secondary batteries of Example 1 and Comparative Example 1.

### DETAILED DESCRIPTION OF THE INVENTION

Hereinafter, embodiments of the present invention will be described with reference to the drawings.

### Electrode

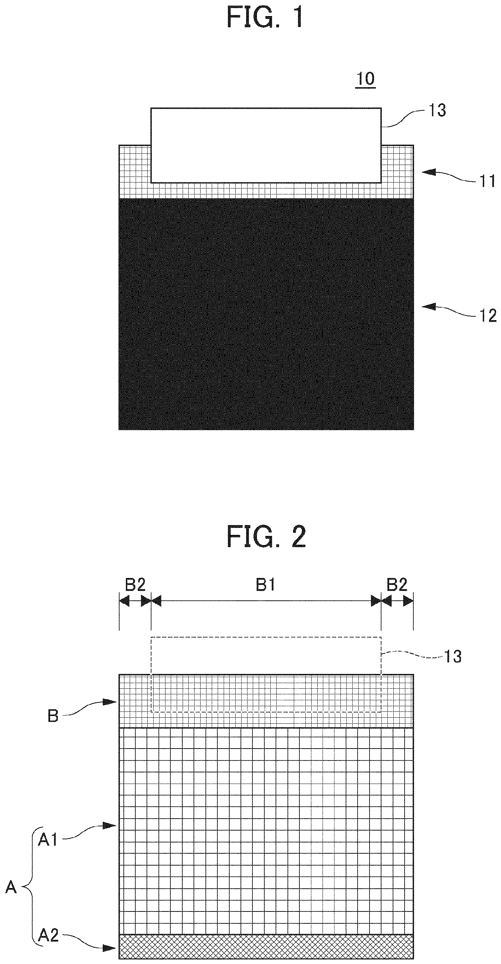

FIG. 1 shows an example of an electrode according to an embodiment of the present invention. FIG. 2 shows a current collector for the electrode of FIG. 1.

The electrode 10 includes a current collector 11, an electrode material mixture 12, and an electrode tab 13. The current collector 11 is a porous metal body having a region A and a region B with a porosity lower than that of the region A (see FIG. 2). In the electrode 10, the region A of the current collector 11 has pores filled with the electrode material mixture 12, and the electrode tab 13 is fixed on the region B of the current collector 11. The region A of the current collector 11 has a subregion A1 and a subregion A2 with a porosity lower than that of the subregion A1, and the subregion A2 is more distant from the electrode tab 13 than the subregion A1.

In the electrode 10, the region B of the current collector 11, which has a porosity lower than that of the region A of the current collector 11, improves the electronic conductivity between the electrode tab 13 and the electrode material mixture 12 and thus reduces the electronic resistance. The region B also has an increased strength to prevent the breakage or cracking of the electrode 10 and to provide increased durability.

In the electrode 10, the current collector 11 also has the subregion A2 with a porosity lower than that of the subregion A1 of the current collector 11. Such a low porosity improves the electronic conductivity to the distal end of the subregion A2 and results in a reduction in electronic resistance. These features are particularly advantageous in increasing the size or length of the electrode 10.

The region A of the current collector 11 preferably has a porosity of 85% or more and 99% or less, more preferably 90% or more and 98% or less.

The region B of the current collector 11 preferably has a porosity of 1% or more and 50% or less, more preferably 1% or more and 10% or less.

The subregion A1 of the current collector 11 preferably has a porosity of 93% or more and 99% or less, more preferably 95% or more and 98% or less.

The subregion A2 of the current collector 11 preferably has a porosity of 90% or more and 97% or less, more preferably 90% or more and 93% or less.

The region B of the current collector 11 has a subregion B1 on which the electrode tab 13 is fixed and a subregion B2 on which no electrode tab is fixed. The subregion B1 may have a porosity lower than that of the region A. These features further improve the electronic conductivity between the electrode tab 13 and the electrode material mixture 12.

As used herein, the expression "a subregion B1 on which the electrode tab is fixed" refers to a subregion in which the electrode tab is located when the fixed-electrode-tab side of the current collector is viewed from above. Such a subregion may include an additional portion other than the portion where the electrode tab is actually provided. The expression "a subregion B2 on which no electrode tab is fixed" refers to a subregion in which no electrode tab is found when the current collector is viewed in the same way.

The subregion B1 of the current collector 11 preferably has a porosity of 1% or more and 50% or less, more preferably 1% or more and 10% or less.

The subregion B2 of the current collector 11 preferably has a porosity of 5% or more and 50% or less, more preferably 5% or more and 20% or less.

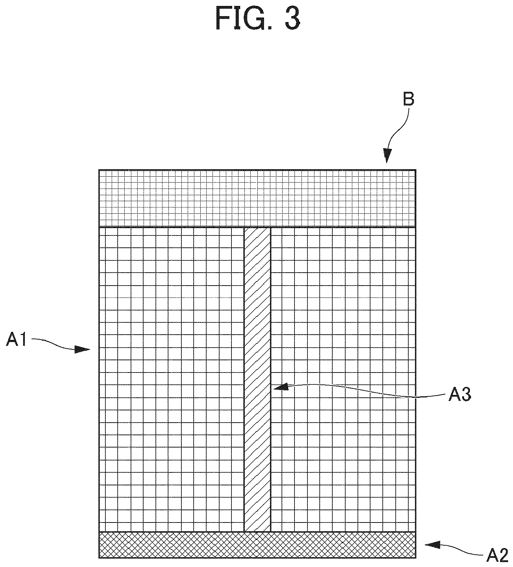

The region A of the current collector 11 may further have a subregion A3 that connects the subregion A2 of the current collector 11 and the region B of the current collector 11, and the subregion A3 may have a porosity lower than that of the subregion A1 (see FIG. 3). These features further improve the electronic conductivity to the distal end of the subregion A2, which results in a further reduction in electronic resistance.

When the region A of the current collector 11 further has the subregion A3, the porosity ε_{A1} of the subregion A1, the porosity ε_{A2} of the subregion A2, the porosity ε_{A3} of the subregion A3, the porosity ε_{B1} of the subregion B1, and the porosity ε_{B2} of the subregion B2 in the current collector 11 may satisfy the formula: ε_{A1} > ε_{A3} ≥ ε_{A2} > ε_{B2} ≥ ε_{B1}.
This feature further improves the electronic conductivity to the distal end of the subregion A2, which results in a further reduction in electronic resistance.

The subregion A3 of the current collector 11 preferably has a porosity of 90% or more and 98% or less, more preferably 93% or more and 95% or less.

For example, the current collector 11 may be obtained by subjecting a porous metal body to pressing in an appropriate way to form the region A (including subregions A1, A2, and A3) and the region B (including subregions B1 and B2) before or after being loaded with the electrode material mixture 12.

The current collector 11 may have any appropriate shape, such as a substantially rectangular parallelepiped shape.

As used herein, the term "substantially rectangular parallelepiped" is intended to include not only rectangular parallelepiped but also chamfered rectangular parallelepiped.

In this regard, the chamfering may be any of C chamfering and R chamfering.

### Porous Metal Body

The porous metal body may be any type having pores capable of being filled with the electrode material mixture. The porous metal body may be, for example, a foamed metal.

The foamed metal has a network structure having a large surface area. When the foamed metal is used as the current collector, the pores of the foamed metal can be filled with the electrode material mixture such that the amount of the electrode active material can be relatively large per unit area of the electrode, which provides an increased volume energy density for a secondary battery. In this case, the electrode material mixture can also be easily immobilized, so that a thick film of the electrode material mixture can be formed without increasing the viscosity of the slurry used when the electrode material mixture is applied. It is also possible to reduce the amount of the binder necessary to thicken the slurry. Therefore, the electrode material mixture can be formed into a film with a large thickness and a low resistance as compared to that formed when a metal foil is used as the current collector. As a result, the electrode has an increased capacity per unit area, which contributes to increasing the capacity of secondary batteries.

The porous metal body may be made of, for example, nickel, aluminum, stainless steel, titanium, copper, silver, a nickel-chromium alloy, or any other appropriate metal. In particular, the porous metal body for forming a positive electrode current collector is preferably a foamed aluminum, and the porous metal body for forming a negative electrode current collector is preferably a foamed copper or a foamed nickel.

### Electrode Material Mixture

The electrode material mixture includes an electrode active material and may further contain an additional component.

Examples of the additional component include a solid electrolyte, a conductive aid, and a binder.

The positive electrode active material in the positive electrode material mixture may be any appropriate material capable of storing and releasing lithium ions. Examples of the positive electrode active material include, but are not limited to, LiCoO₂, Li(Ni_{5/10}Co_{2/10}Mn_{3/10})O₂, Li(Ni_{6/10}Co_{2/10}Mn_{2/10})O₂, Li(Ni_{8/10}Co_{1/10}Mn_{1/10})O₂, Li(Ni_{0.8}Co_{0.15}Al_{0.05})O₂, Li (Ni_{1/6}Co_{4/6}Mn_{1/6})O₂, Li(Ni_{1/3}Co_{1/3}Mn_{1/3})O₂, LiCoO₄, LiMn₂O₄, LiNiO₂, LiFePO₄, lithium sulfide, and sulfur.

The negative electrode active material in the negative electrode material mixture may be any appropriate material capable of storing and releasing lithium ions. Examples of the negative electrode active material include, but are not limited to, metallic lithium, lithium alloys, metal oxides, metal sulfides, metal nitrides, Si, SiO, and carbon materials.

Examples of the carbon materials include artificial graphite, natural graphite, hard carbon, and soft carbon.

### Electrode Tab

The electrode tab may be any type including any known electrode tab.

### Method of Producing Electrode

The electrode according to the embodiment may be produced using any method common in the field of the art.

Any appropriate method may be used to fill the pores of the region A of the current collector with the electrode material mixture, which may include, for example, using a plunger-type die coater to fill the pores of the region A of the current collector with a slurry containing the electrode material mixture under pressure.

An alternative method of filling the pores of the region A of the current collector with the electrode material mixture may include generating a pressure difference between one side of the current collector, from which the electrode material mixture is to be introduced, and the opposite side of the current collector; and allowing the electrode material mixture to infiltrate into the pores of the region A of the current collector according to the pressure difference. In this case, the electrode material mixture may be introduced in any form. The electrode material mixture may be in the form of a powder, or a liquid, such as a slurry, containing the electrode material mixture may be introduced.

The step of filling the pores of the region A of the current collector with the electrode material mixture may be followed by any appropriate process common in the field of the art. For example, such a process may include drying the current collector having the region A filled with the electrode material mixture; then pressing the current collector; and welding an electrode tab to the current collector to form an electrode. In this process, the pressing can adjust the porosity of the current collector and the density of the electrode material mixture.

The current collector having the region A filled with the electrode material mixture can be pressed with the current collector being uniformly compressed so that the magnitude relationship between the porosities of the regions and subregions of the current collector can be kept unchanged.

### Electricity Storage Device

The electricity storage device according to an embodiment of the present invention includes the electrode according to the embodiment.

The electricity storage device may be, for example, a secondary battery, such as a lithium-ion secondary battery, or a capacitor.

The lithium-ion secondary battery may be a liquid electrolyte battery or a solid or gel electrolyte battery. The solid or gel electrolyte may be an organic or inorganic material.

Only the positive or negative electrode may be the electrode according to the embodiment, or each of the positive and negative electrodes may be the electrode according to the embodiment.

In particular, the electrode according to the embodiment is advantageously used as the positive electrode of a lithium-ion secondary battery since the negative electrode active material has high electronic conductivity.

### Lithium-Ion Secondary Battery

The lithium-ion secondary battery according to an embodiment of the present invention includes a positive electrode, a negative electrode, and a separator or solid electrolyte layer provided between the positive and negative electrodes. In the lithium-ion secondary battery according to the embodiment, at least one of the positive and negative electrodes is the electrode according to the embodiment.

In the lithium-ion secondary battery according to the embodiment, the positive or negative electrode, which is not the electrode according to the embodiment, may be any appropriate electrode that functions as a positive or negative electrode for a lithium-ion secondary battery.

The lithium-ion secondary battery according to the embodiment may be any type and may include two materials with different charge/discharge potentials selected from materials available to form electrodes, one of which has a noble potential for the positive electrode and the other of which has a potential less noble for the negative electrode.

When the lithium-ion secondary battery according to the embodiment include a separator, the separator is located between the positive and negative electrodes.

The separator may be any type including any known separator available for lithium-ion secondary batteries.

When the lithium-ion secondary battery according to the embodiment includes a solid electrolyte layer, the solid electrolyte layer is located between the positive and negative electrodes.

The solid electrolyte in the solid electrolyte layer may be any material capable of conducting lithium ions between the positive and negative electrodes.

The solid electrolyte may be, for example, an oxide electrolyte or a sulfide electrolyte.

### EXAMPLES

Hereinafter, examples of the present invention will be described, which are not intended to limit the present invention.

### Example 1

### Preparation of Positive Electrode

### Working of Porous Metal Body

A foamed aluminum sheet in a substantially rectangular parallelepiped shape was provided as a porous metal body. The foamed aluminum sheet had a width of 30 mm, a length of 40 mm, a thickness of 1 mm, a porosity of 97%, a pore size of 0.5 mm, a specific surface area of 5,000 m²/m³, and 46 cells per inch.

Another foamed aluminum sheet was placed over an end portion of the foamed aluminum sheet, on which an electrode tab was to be fixed, and subjected to pressing to form the region B with an adjusted porosity of 5%. Another end portion of the foamed aluminum sheet, on which no electrode tab was to be fixed, was subjected to pressing to form the subregion A2 with an adjusted porosity of 95%, so that a worked porous metal body was obtained.

The porosity of the worked porous metal body was calculated by the method shown below. First, a 16 mmϕ circular sample was punched out of each of the regions and subregions of the worked porous metal body. The thickness of each sample was measured and used to calculate the volume of each sample. The mass of each sample was then measured and used to calculate the density of each sample. Finally, the ratio of the density of each sample to the true density of the metal of the porous metal body was calculated to be the porosity of each sample.

### Preparation of Positive Electrode Material Mixture Slurry

LiNi_{0.5}Co_{0.2}Mn_{0.3}O₂ was provided as a positive electrode active material.

A mixture of 94% by mass of the positive electrode active material, 4% by mass of carbon black as a conductive aid, and 2% by mass of polyvinylidene fluoride (PVDF) as a binder was prepared and then dispersed in an appropriate amount of N-methyl-2-pyrrolidone (NMP) to form a positive electrode material mixture slurry.

### Filling with Positive Electrode Material Mixture

The positive electrode material mixture slurry was applied at a coating weight of 90 mg/cm² to the worked porous metal body using a plunger-type die coater, and then dried under vacuum at 120°C for 12 hours. The worked porous metal body filled with the positive electrode material mixture was then roll-pressed with a pressing force of 15 tons to form a positive electrode material mixture-filled, positive electrode current collector. An electrode tab was welded to the region B of the positive electrode material mixture-filled, positive electrode current collector, so that a positive electrode was obtained. In the resulting positive electrode, the electrode material mixture had a coating weight of 90 mg/cm² and a density of 3.2 g/cm³. The resulting positive electrode was punched into a size of 3 cm × 4 cm before use.

### Preparation of Negative Electrode

### Preparation of Negative Electrode Material Mixture Slurry

A mixture of 96.5% by mass of natural graphite, 1% by mass of carbon black as a conductive aid, 1.5% by mass of styrene butadiene rubber (SBR) as a binder, and 1% by mass of sodium carboxymethylcellulose (CMC) as a thickener was prepared and then dispersed in an appropriate amount of distilled water to form a negative electrode material mixture slurry.

### Formation of Negative Electrode Material Mixture Layer

An 8 µm-thick copper foil was provided as a negative electrode current collector. The negative electrode material mixture slurry was applied at a coating weight of 45 mg/cm² to the current collector using a die coater, and then dried under vacuum at 120°C for 12 hours. The current collector with the negative electrode material mixture layer was roll-pressed at a pressing force of 10 tons to form a negative electrode. In the resulting negative electrode, the electrode material mixture layer had a coating weight of 45 mg/cm² and a density of 1.5 g/cm³. The resulting negative electrode was punched into a size of 3 cm × 4 cm before use.

### Preparation of Lithium-Ion Secondary Battery

A 25 µm-thick microporous membrane, which was a laminate of three layers: polypropylene/polyethylene/polypropylene, was provided and punched into a size of 3 cm × 4 cm before use as a separator.

An aluminum laminate for a secondary battery was heat-sealed to form a bag-shaped product. The separator was placed between the positive and negative electrodes. The resulting laminate was inserted in the bag-shaped product to form a laminate cell.

The electrolytic solution prepared was a solution of 1.2 mol LiPF₆ in a mixed solvent of ethylene carbonate, dimethyl carbonate, and ethyl methyl carbonate in a volume ratio of 3:4:3.

The electrolytic solution was injected into the laminate cell so that a lithium-ion secondary battery was obtained.

### Comparative Example 1

A lithium-ion secondary battery was prepared as in Example 1 except that the porous metal body was not subjected to the working and used as it was in the process of preparing the positive electrode.

### Evaluation of Initial Characteristics of Lithium-Ion Secondary Battery

The lithium-ion secondary battery of each of Example 1 and Comparative Example 1 was evaluated for initial characteristics as shown below.

### Initial Discharge Capacity

The lithium-ion secondary battery was allowed to stand at a measurement temperature (25°C) for 3 hours, then charged at a constant current of 0.33 C until 4.2 V was reached, and subsequently charged at a constant voltage of 4.2 V for 5 hours. Subsequently, the lithium-ion secondary battery was allowed to stand for 30 minutes, and then discharged at a discharge rate of 0.33 C until 2.5 V was reached, when the discharge capacity was measured. The resulting discharge capacity was determined to be the initial discharge capacity.

### Initial Cell Resistance

After the measurement of the initial discharge capacity, the lithium-ion secondary battery was adjusted to a charge level (State of Charge (SOC)) of 50%. Subsequently, the lithium-ion secondary battery was discharged at a current of 0.2 C for 10 seconds, and then its voltage was measured 10 seconds after the completion of the discharge. Next, after being allowed to stand for 10 minutes, the lithium-ion secondary battery was supplementarily charged until SOC returned to 50%, and then allowed to stand for 10 minutes. The operation shown above was performed at each of the C rates 0.5 C, 1 C, 1.5 C, 2 C, and 2.5 C. The resulting current values were plotted on the horizontal axis, and the resulting voltage values were plotted on the vertical axis. The initial cell resistance of the lithium-ion secondary battery was defined as the slope of an approximate straight line obtained from the plots.

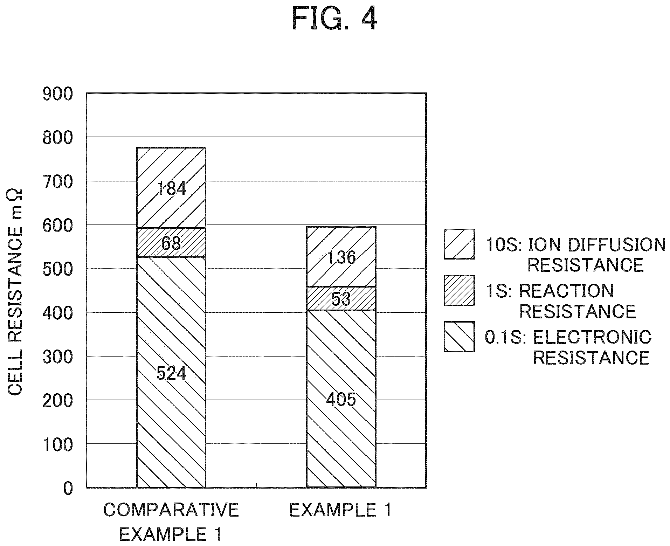

FIG. 4 shows the results of the evaluation of the initial cell resistance of the lithium-ion secondary batteries of Example 1 and Comparative Example 1.

FIG. 4 indicates that the lithium-ion secondary battery of Example 1 has an initial cell resistance (in particular, an electronic resistance) lower than that of the lithium-ion secondary battery of Comparative Example 1.

### C-Rate Characteristics

After the measurement of the initial discharge capacity, the lithium-ion secondary battery was allowed to stand at a measurement temperature (25°C) for 3 hours, then charged at a constant current of 0.33 C until 4.2 V was reached, and subsequently charged at a constant voltage of 4.2 V for 5 hours. Subsequently, the lithium-ion secondary battery was allowed to stand for 30 minutes, and then discharged at a discharge rate (C rate) of 0.5 C until 2.5 V was reached, when the initial discharge capacity was measured.

The operation shown above was performed at each of the C rates 0.33 C, 1 C, 1.5 C, 2 C, and 2.5 C. The resulting initial discharge capacity at each C rate was converted to a capacity retention using the initial discharge capacity at 0.33 C normalized to 100%, so that its C-rate characteristics were determined.

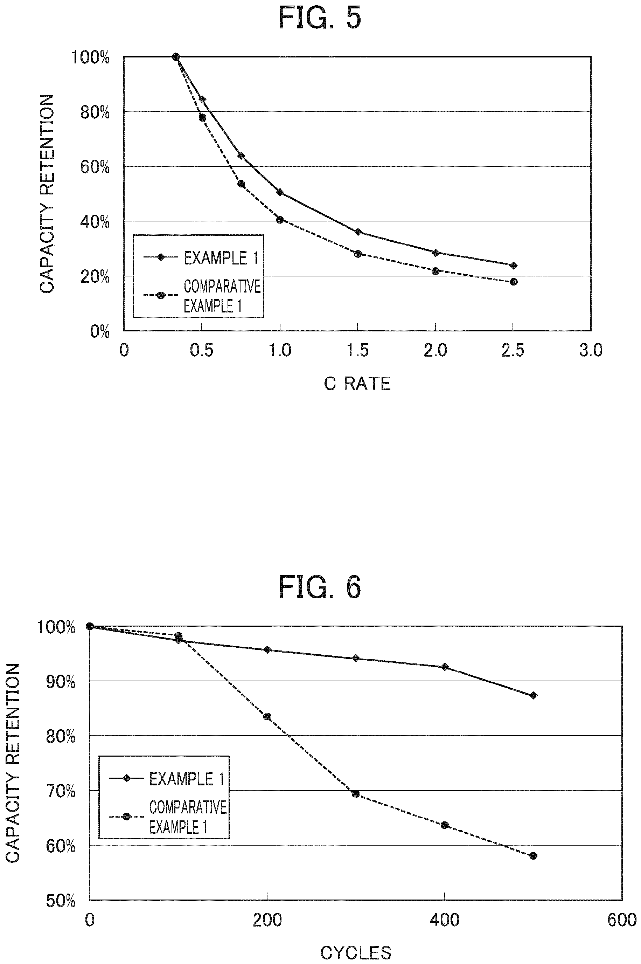

FIG. 5 shows the results of the evaluation of the C-rate characteristics of the lithium-ion secondary batteries of Example 1 and Comparative Example 1.

FIG. 5 indicates that the lithium-ion secondary battery of Example 1 has a capacity retention higher than that of the lithium-ion secondary battery of Comparative Example 1.

### Evaluation of Characteristics of Lithium-Ion Secondary Battery after Endurance Test

The lithium-ion secondary battery of each of Example 1 and Comparative Example 1 was evaluated for characteristics after an endurance test as shown below.

### Discharge Capacity after Endurance Test

In a thermostatic chamber at 45°C, the lithium-ion secondary battery was subjected to 100 cycles of charging to 4.2 V at a constant current of 0.6 C, subsequent charging at a constant voltage of 4.2 V for 5 hours or until a current of 0.1 C was reached, subsequent standing for 30 minutes, subsequent constant-current discharging to 2.5 V at a discharge rate of 0.6 C, and subsequent standing for 30 minutes. Next, in a thermostatic chamber at 25°C, the lithium-ion secondary battery, after the discharging to 2.5 V of the endurance test, was allowed to stand for 24 hours and then measured for discharge capacity in the same way as that for the initial discharge capacity. The operation shown above was repeated for each set of the 100 cycles, and the discharge capacity after the endurance test was measured until 500 cycles were completed.

### Cell Resistance after Endurance Test

After the completion of the 500 cycles for the measurement of the discharge capacity after the endurance test, the lithium-ion secondary battery was adjusted to a charge level (State of Charge (SOC)) of 50% when the cell resistance after the endurance test was determined in the same way as that for the initial cell resistance.

### Capacity Retention

The capacity retention after each set of the 100 cycles was defined as the ratio of the discharge capacity after the endurance test of the 100 cycles to the initial discharge capacity.

FIG. 6 shows the results of the evaluation of the capacity retention of the lithium-ion secondary batteries of Example 1 and Comparative Example 1.

FIG. 6 indicate that the lithium-ion secondary battery of Example 1 has a capacity retention higher than that of the lithium-ion secondary battery of Comparative Example 1 after the 200 to 500 cycles.

### Rate of Change in Resistance

The rate of change in resistance was defined as the ratio of the cell resistance after the endurance test to the initial cell resistance.

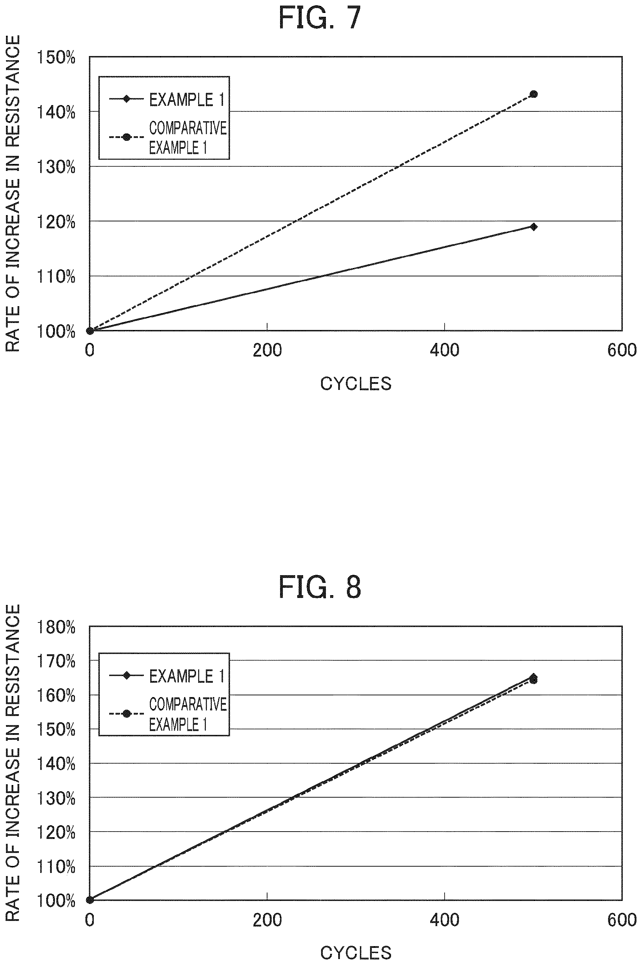

FIG. 7 shows the results of the evaluation of the rate of change in the electronic resistance (0.1 S) of the lithium-ion secondary batteries of Example 1 and Comparative Example 1.

FIG. 8 shows the results of the evaluation of the rate of change in the reaction resistance (1 S) of the lithium-ion secondary batteries of Example 1 and Comparative Example 1.

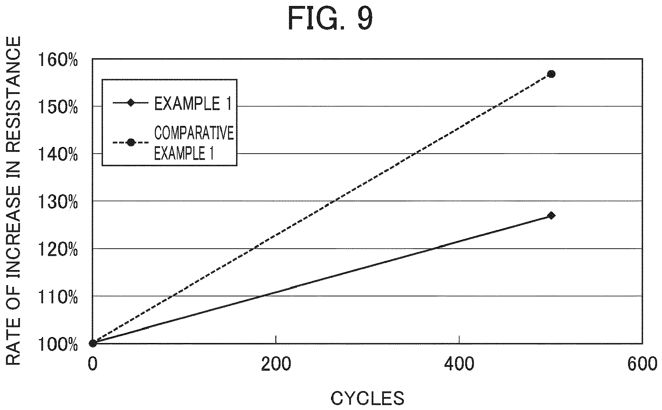

FIG. 9 shows the results of the evaluation of the rate of change in the ion diffusion resistance (10 S) of the lithium-ion secondary batteries of Example 1 and Comparative Example 1.

FIGS. 7 to 9 indicate that the lithium-ion secondary battery of Example 1 shows a rate of change in resistance lower than that shown by the lithium-ion secondary battery of Comparative Example 1 with respect to the electronic resistance (0.1 S) and the ion diffusion resistance (10 S) after the 500 cycles.

The results shown above indicate that the durability of the positive electrode of Example 1 is higher than that of the positive electrode of Comparative Example 1.

Provided is an electrode including: a current collector; an electrode material mixture; and an electrode tab, the current collector being a porous metal body having a region A and a region B with a porosity lower than that of the region A, the region A having pores filled with the electrode material mixture, the electrode tab being fixed on the region B, the region A having a subregion A1 and a subregion A2 with a porosity lower than that of the subregion A1, the subregion A2 being more distant from the electrode tab than the subregion A1. Also provided is an electricity storage device including the electrode.

### EXPLANATION OF REFERENCE NUMERALS

- 10:: Electrode
- 11:: Current collector
- 12:: Electrode material mixture
- 13:: Electrode tab

## Claims

1. An electrode (10) comprising: a current collector (11); an electrode material mixture (12); and an electrode tab (13),
the current collector (11) being a porous metal body having a region A and a region B with a porosity lower than that of the region A,
the region A having pores filled with the electrode material mixture (12),
the electrode tab (13) being fixed on the region B,
the region A having a subregion A1 and a subregion A2 with a porosity lower than that of the subregion A1,
the subregion A2 being more distant from the electrode tab (13) than the subregion A1.

2. The electrode (10) according to claim 1, wherein
the region B has a subregion B1 on which the electrode tab (13) is fixed and a subregion B2 on which no electrode tab (13) is fixed, and
the subregion B1 has a porosity lower than that of the region A.

3. The electrode (10) according to claim 1 or 2, wherein
the region A further has a subregion A3 that connects the subregion A2 and the region B, and
the subregion A3 has a porosity lower than that of the subregion A1.

4. The electrode (10) according to claim 2, wherein
the region A further has a subregion A3 that connects the subregion A2 and the region B, and
the subregions A1, A2, A3, B1, and B2 respectively have a porosity of ε_{A1}, a porosity of ε_{A2}, a porosity of ε_{A3}, a porosity of ε_{B1}, and a porosity of ε_{B2} satisfying the formula: ε_{A1} > ε_{A3} ≥ ε_{A2} > ε_{B2} ≥ ε_{B1}.

5. The electrode (10) according to any one of claims 1 to 4, wherein the current collector (11) has a substantially rectangular parallelepiped shape.

6. An electricity storage device comprising the electrode (10) according to any one of claims 1 to 5.
